# EUROPEAN PATENT SPECIFICATION

(11) **EP 2 922 321 B1**
(45) Date of publication and mention of the grant of the patent: **10.01.2018**
(21) Application number: 13855618.8
(22) Date of filing: 16.09.2013
(51) Int. Cl.: H04W 84/18, H04W 4/00, H04W 84/22, H04W 12/08, H04L 29/12

(54) **6LOWPAN NETWORK-BASED SERVICE DISCOVERY**
6LOWPAN-NETZWERKBASIERTE DIENSTERKENNUNG
RECHERCHE DE SERVICE BASÉE SUR UN RÉSEAU 6LOWPAN

(30) Priority: 15.11.2012 CN 201210458856
(43) Date of publication of application: 23.09.2015
(73) Proprietor: ZTE Corporation, Shenzhen, Guangdong 518057 (CN)
(72) Inventor: YU, Changjian, Shenzhen Guangdong 518057 (CN); SUN, Zhixin, Shenzhen Guangdong 518057 (CN); ZHANG, Zhenwei, Shenzhen Guangdong 518057 (CN); TANG, Suning, Shenzhen Guangdong 518057 (CN); HE, Jun, Shenzhen Guangdong 518057 (CN)
(74) Representative: Awapatent AB
(86) International application number: PCT/CN2013/083572
(87) International publication number: WO 2014/075502

(56) References cited:
- CN-A- 1 761 233
- CN-A- 102 316 091
- CN-A- 102 448 075
- CN-A- 102 469 449
- KIM K ET AL: "Simple Service Location Protocol (SSLP) for 6LoWPAN; draft-daniel-6lowpan-sslp-02.txt", SIMPLE SERVICE LOCATION PROTOCOL (SSLP) FOR 6LOWPAN; DRAFT-DANIEL-6LOWPAN-SSLP-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 26 October 2009 (2009-10-26), XP015065026, [retrieved on 2009-10-26]
- OSTMARK A ET AL: "Service and device discovery of nodes in a wireless sensor network", CONSUMER COMMUNICATIONS AND NETWORKING CONFERENCE, 2006. CCNC 2006. 20 06 3RD IEEE LAS VEGAS, NV, USA 8-10 JAN. 2006, PISCATAWAY, NJ, USA,IEEE, vol. 1, 8 January 2006 (2006-01-08), pages 218-222, XP010893162, DOI: 10.1109/CCNC.2006.1593019 ISBN: 978-1-4244-0085-0
- RAZA M T ET AL: "FESP: Fast and Energy Efficient Service Provisioning in 6LoWPAN", PERSONAL INDOOR AND MOBILE RADIO COMMUNICATIONS (PIMRC), 2010 IEEE 21ST INTERNATIONAL SYMPOSIUM ON, IEEE, PISCATAWAY, NJ, USA, 26 September 2010 (2010-09-26), pages 2575-2580, XP031838034, ISBN: 978-1-4244-8017-3
- FATIMA MUHAMMAD ANWAR ET AL: "Survey on service discovery for Wireless Sensor Networks", UBIQUITOUS AND FUTURE NETWORKS (ICUFN), 2010 SECOND INTERNATIONAL CONFERENCE ON, IEEE, PISCATAWAY, NJ, USA, 16 June 2010 (2010-06-16), pages 17-21, XP031731552, ISBN: 978-1-4244-8088-3
- HUI ARCH ROCK CORPORATION J: "Neighbor Discovery and Autoconfiguration for Route-Over 6LoWPAN Networks; draft-hui-6lowpan-nd-00.txt", NEIGHBOR DISCOVERY AND AUTOCONFIGURATION FOR ROUTE-OVER 6LOWPAN NETWORKS; DRAFT-HUI-6LOWPAN-ND-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 28 July 2008 (2008-07-28), XP015057797,

## Description

### Technical Field

The present invention relates to the field of communication technology, and particularly, to a service discovery method and apparatus based on an IPv6 over Low-Power Wireless Personal Area Networks (6LoWPAN) network.

### Background of the Related Art

Service Discovery (SD) as a key application layer protocol of the traditional network enables a device to automatically release or acquire available services over the network. In an Internet of Things application, since an intelligent terminal cannot conveniently realize a direct interaction with users, and there can be various applications in the same network deployment, therefore, the service discovery seems particularly important in the Internet of Things application. For example, in a building automation system, a switch gear is required to find a corresponding light source device; and in a temperature acquisition system, a temperature sensor is required to find a corresponding anchor node. The service discovery is executed for the first time when the network is initialized and performed periodically after the network is stabilized, and the service discovery is also triggered after new devices access the network.

A 6LoWPAN protocol implements an adaptation function between a TCP/IP protocol stack and a link layer protocol based on the IEEE802.15.4, thus a 6LoWPAN network can effectively implement a stronger interactivity and extendibility with a traditional IP network. At present the 6LoWPAN study of the Internet Engineering Task Force (IETF) is still at the stage of key technology study, the IETF has resolved problems such as protocol adaptation and data packet compression and released a standard document; a 6LoWPAN neighbor discovery protocol, a Routing Protocol for LLN (RPL) protocol and a Constrained Application Protocol (CoAP) application layer protocol are all lightweight protocols made in combination with a traditional Internet Protocol (IP) network protocol, and they are still at the stage of standard draft at present.

A neighbor discovery mechanism is a key feature of the Internet Protocol Version 6 (IPv6) and processes start and maintenance of nodes in an IPv6 link. The basic IPv6 neighbor discovery protocol [RFC4816] is not applicable to the 6LoWPAN. The 6LoWPAN workgroup particularly establishes the 6LoWPAN neighbor discovery protocol (6LoWPAN-ND) for the low power consumption wireless network and 6LoWPAN, wherein network automatic configuration and an interaction mechanism between a host, a route and a border router are described in detail, so as to complete registration and address allocation of each node within a LoWPAN field. A node registry of each LoWPAN field is saved by a corresponding border router, which simplifies the operation for the IPv6 and also reduces the number of multicast information flows.

Due to the limited energy consumption of 6LoWPAN wireless terminal resources and the limitation of low rate of 802.15.4 wireless links, the service discovery of the 6LoWPAN network must achieve lightweight overhead and a simple and extensible mechanism; meanwhile requirements such as a huge number of terminals should also be considered.

At present there is no uniform standard with regard to the service discovery of the Internet of Things terminal, a service discovery mechanism facing to the 6LoWPAN protocol is still at the stage of requirement discussion. The latest standard draft provided by the IETF CoRE workgroup gives a plurality of typical service discovery interaction scenarios and modes of the wireless network based on IP and the Internet, and proposes a service discovery idea based on a Constrained Application Protocol (CoAP). In addition, the IETF draft proposes an idea of combining the service discovery with the neighbor discovery mechanism and the service discovery of the traditional IP network, but no specific method is given.

Since the 6LoWPAN network is the wireless network based on the IP, the service discovery of the 6LoWPAN network may refer to the service discovery protocol of the traditional IP network. The typical SD protocols of the traditional IP network mainly contain three kinds of: a Service Location Protocol (SLP), a Zeroconf suite and a Universal Plug and Play (UPnP) framework. The SLP and the Zeroconf suite are both standard protocols established by the IETF, and the UPnP framework is developed and accomplished by a UPnP community.

The Zeroconf and UPnP implement other functions including address automatic configuration and so on besides the basic service discovery mechanism. The Zeroconf is used for executing the address automatic configuration and host name parse without a Domain Name System (DNS) server and using the DNS to complete discovery services. The Zeroconf also implements a relatively simple discovery mechanism, but the protocol is required to multicast all the queried local links, and the framework does not provide a cache agent mechanism similar to the Directory Agent (DA) in the SLP, and the extensibility is a problem. The UPnP runs on the IP protocol, uses an automatic configuration feature of the standard IP, and provides a Simple Service Discovery Protocol (SSDP), and a service message of the UPnP is represented by a comparatively complicated Extensible Markup Language (XML).

Moreover, certain networks based on low-power consumption wireless links are also based on a non-IP protocol, such as the zigbee, the zigbee alliance designs a complete set of protocols from the network layer to the application layer, including a method for device discovery and service discovery being applicable to a zigbee network. The device discovery is mainly to acquire a node address through a unicast or broadcast message; the service discovery is to accomplish the query of services of each node in one particular device or services used for one matched device (either broadcast or unicast) nearby, and it is described by using a complex, a user, a node or power added with a simple remote terminal address (used for connecting application objects). Since the zigbee service discovery is only for the zigbee network, it lacks certain extendibility.

The document "Simple Service Location Protocol (SSLP) for 6LoWPAN; draft-daniel-6lowpan-sslp-02.txt" provides a framework for the discovery and selection of the services working on 6LoWPAN.

The document "Service and device discovery of nodes in a wireless sensor network" provides a number of well-known service discovery protocols.

### Summary of the Invention

The technical problem required to be solved in the embodiments of the present invention is to provide a service discovery method and apparatus based on an IPv6 over Low-Power Wireless Personal Area Networks (6LoWPAN) network, to solve the problem that high resource overhead exist in the service discovery of an Internet of Things terminal in the related art.

The above problem is solved by a method according to claim 1 and a system according to claim 6. Further improvements and embodiments are provided in the dependent claims.

On the one hand, the embodiment of the present invention provides a service discovery method based on a 6LoWPAN network, which comprises:
an initialization step, wherein a host completes a router discovery process and a host address registration process respectively;
a service registration step, wherein a service agent SA advertises a service type that can be provided by the SA to a border router; and
a service query step, wherein a user agent UA queries information of the SA that can provide the service to the border router; the border router sends service query response information to the UA; and application interaction is performed between the SA and the UA.

Optionally, the border router is taken as a directory agent DA; the SA is a router or a host, the UA is a router or a host; but in a same application interaction, the router or the host can only serve as one of the SA and the UA.

Optionally, the initialization step specifically comprises:
the host firstly performing multicast to send a router solicitation message RS to search the router, the router replying with a router advertisement message RA to the host, and wherein the router advertisement message RA carries address prefix information, an authoritative border router option and a directory agent DA marker, and the host advertising a DA address in the whole network; and completing a router discovery process and a DA discovery process; and
the host constructing a global IP address of the host according to the received address prefix information, performing address registration to the router through a neighbor solicitation message NS, and wherein the neighbor solicitation message NS carries an address registration option; and the router feeding a neighbor advertisement message NA back to the host, carrying a registration result state option.

Optionally, the service registration step specifically comprises:
the SA sending a service registration request message to the border router, carrying a URL of a service type provided by the SA;
when receiving the service registration request message, the border router searching a coincident service type in a service database, and adding an address of the SA and service configuration information into a corresponding service type; and
after the service registration is completed, the border router sending a service registration response message to the SA to indicate whether the registration is successful or not.

Optionally, the service query step specifically comprises:
the UA sending a service query message to the DA for requesting a service in the network, wherein the service query message carries a service type and a parameter configuration of the service type , and indicating a service expected to be acquired by providing a URL of a URL expected to be responded by a service; and
the DA searching a matched URL according to the service type, meanwhile screening out eligible SA devices according to parameters sent by the UA, and merging information of the SA devices into one response, and sending the service query response information to the UA, wherein the information contains a URL list that can provide corresponding services.

Optionally, before the service registration step, authentication and authorization are performed on a service route.

On the other hand, the embodiment of the present invention further provides a service discovery apparatus based on a 6LoWPAN network, which comprises:
an initialization module, configured to make a host complete a router discovery process and a host address registration process respectively;
a service registration module, configured to make a service agent SA advertise a service type that can be provided by the SA to a border router; and
a service query module, configured to make a user agent UA query information of the SA that can provide the service to the border router; make the border router send service query response information to the UA; and make application interaction be performed between the SA and the UA.

Optionally, the border router is taken as a directory agent DA; the SA is taken as a router or a host, the UA is taken as a router or a host; but in a same application interaction, the router or the host can only serve as one of the SA and the UA.

Optionally, the initialization module is specifically configured to:
make the host firstly perform multicast to send a router solicitation message RS to search the router; make the router reply with a router advertisement message RA to the host, and wherein the router solicitation message RS carries address prefix information, an authoritative border router option and a directory agent DA marker; and make a DA address be advertised in the whole network; and make a router discovery process and a DA discovery process be completed; and
make the host construct a global IP address of the host according to the received address prefix information, perform address registration to the router through a neighbor solicitation message NS, wherein the neighbor solicitation message NS carries an address registration option; and make the router feed a neighbor advertisement message NA back to the host, wherein the neighbor advertisement message NA carries a registration result state option.

Optionally, the service registration module is specifically configured to:
make the SA send a service registration request message to the border router, wherein service registration request message carries a URL of a service type provided by the SA;
when the border router receives the service registration request message, make the border router search for a coincident service type in a service database, and add an address of the SA and service configuration information into a corresponding service type;
after the service registration is completed, make the border router send a service registration response message to the SA to indicate whether the registration is successful or not.

Optionally, the service query module is specifically configured to:
make the UA send a service query message to the DA for requesting a service in the network, wherein the service query message carries a service type and parameter configuration of the service type, and indicate a service expected to be acquired by providing a URL expected to be responded by the service; and
make the DA search a matched URL according to the service type, screen out eligible SA devices according to parameters sent by the UA in the meantime, and merge information of the SA devices into one response, and send the service query response information to the UA, wherein the information contains a URL list that can provide corresponding services.

Optionally, the apparatus further comprises:
an authentication and authorization module, configured to perform authentication and authorization on a service route before performing the service registration.

The beneficial effects of the embodiments of the present invention are described as follows.

In the embodiments of the present invention, with respect to limitations such as storage capacity and energy consumption of a 6LoWPAN terminal, an interaction mechanism is simplified as much as possible, and a service discovery message is simplified to reduce a data packet load, so as to make the 6LoWPAN terminal adaptable to an 802.15.4 low-rate wireless network, which implements low resource overhead and a simple mechanism; and a service discovery interaction method is particularly designed with respect to cases such as a huge number of application terminals and extensibility of application functions in the Internet of Things, which has advantages of high flexibility and strong extensibility.

### Brief Description of Drawings

FIG. 1 is a flow chart of a service discovery method based on a 6LoWPAN network in the embodiment of the present invention.
FIG. 2 is a flow chart of an initialization process in the embodiment of the present invention.
FIG. 3 is a flow chart of a service discovery process in the embodiment of the present invention.
FIG. 4 is a schematic diagram of structure of a service discovery apparatus based on a 6LoWPAN network in the embodiment of the present invention.
FIG. 5 is another schematic diagram of structure of a service discovery apparatus based on a 6LoWPAN network in the embodiment of the present invention.

### Preferred Embodiments of the Invention

The present invention will be further described in detail in combination with the accompanying drawings and embodiments below. It should be understood that, the specific embodiments described here are only used to explain the embodiments of the present invention, which does not limit the embodiments of the present invention.

The Service Location Protocol (SLP) implements a relatively simple service discovery mechanism, and a service thereof is represented by a Uniform/Universal Resource Locator (URL), thus a message is lightweight and transferred through a User Datagram Protocol (UDP) or a Transmission Control Protocol (TCP), and it is implemented by a simple interaction between three devices namely a directory agent (DA), a service agent (SA) and a user agent (UA), especially the DA as the service agent makes the SLP possess the extendibility. Considered from perspectives of resource overhead, energy consumption and extendibility, the service discovery mechanism with respect to the IPv6 over Low-Power Wireless Personal Area Networks (6LoWPAN) network may refer to the SLP protocol.

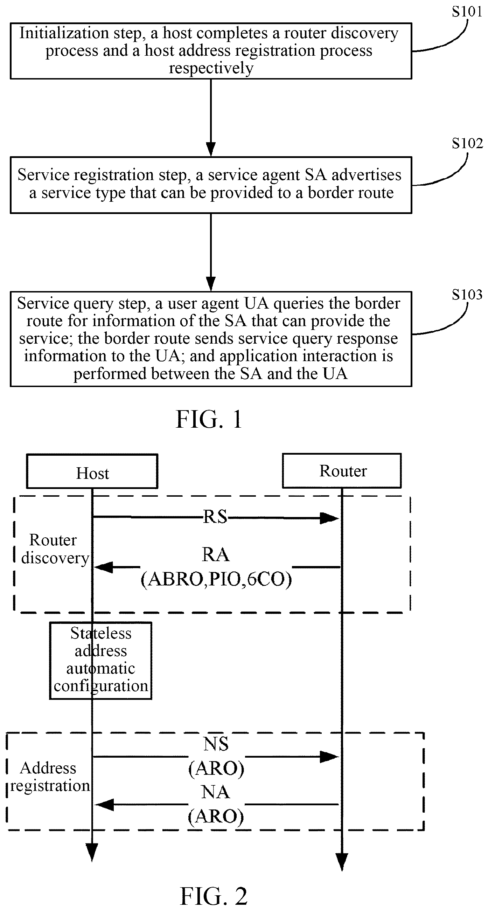

As shown in FIG. 1, the embodiment of the present invention relates to a service discovery method based on a 6LoWPAN network, and the following steps are included:
In step S101, an initialization step, a host completes a router discovery process and a host address registration process respectively.

The initialization of the 6LoWPAN network is mainly implemented through a neighbor discovery protocol and a route protocol, so as to complete basic functions such as construction of the 6LoWPAN network topology, router discovery and address configuration and so on. The implementation of the Neighbor Discovery (ND) protocol especially a plurality of mechanisms added by the 6LoWPAN ND provide a necessary basis for completing the service discovery mechanism of the embodiments of the present invention.

FIG. 2 is a basic interaction mechanism of the neighbor discovery protocol of the 6LoWPAN network, two message hosts RS/RA and NS/NA respectively complete a router discovery process and a host address registration process, it is specifically: the host firstly performing multicast to send a router solicitation message RS to search the router; the router replying with a router advertisement message RA which carries address prefix information (PIO and 6CO), an authoritative border router option (ABRO) and a directory agent DA marker, to the host; and carrying and advertising a DA address in the whole network; and completing a router discovery process and a DA discovery process. In the router discovery process, a border router distributes the prefix information to the network through the RA message, the 6LoWPAN ND adds an authoritative border router option (ABRO) in the RA message, and through this process, information of the border router is advertised in the whole network. The border router is taken as the directory agent (DA) in the embodiment of the present invention, and the DA discovery process in the service discovery process is omitted.

The host constructs its own global IP address according to the received prefix information, that is, a stateless address automatic configuration process. The prerequisite of implementation of the service discovery is network interconnection, that is, the network device performs IP addressing and ensures a uniqueness. The 6LoWPAN neighbor discovery protocol implements the stateless address automatic configuration. The host performs address registration to the router through a neighbor solicitation message NS, which carries an address registration option (ARO), the router feeds a neighbor advertisement message NA which carries a registration result state ARO option back to the host..

The 6LoWPAN network mainly has three kinds of physical devices: a border router (6LBR), which serves as a bridge for connecting the 6LoWPAN network with an external network, belongs to a category of nodes with the strongest performance in the 6LoWPAN network, completes management configuration for 6LoWPAN nodes within the field, such as an auto-control gateway in a building automation system, and a 6LoWPAN network can have multiple 6LBRs; a router (6LR), which is located within the 6LoWPAN network, construction of the 6LoWPAN network topology and routing forwarding of data are completed through a routing protocol between the routers, due to a particularity of the self-organizing network topology, the 6LR can serve as the service agent in the meantime, for example, one sensing node can complete forwarding of data from other nodes in the meantime; a host (6LH, e.g. a sensing device), which is located within the 6LoWPAN network and associated with the 6LR through a neighbor discovery protocol, and since performance limitations such as resource energy consumption of the 6LH are stronger, it can only serve as the end device of the 6LoWPAN network.

In the embodiments of the present invention, according to functional characteristics of the 6LoWPAN network devices, the above three kinds of physical devices are mapped as three kinds of logical devices being applicable to the service discovery mechanism: a directory agent (DA), a service agent (SA) and a user agent (UA).

DA: corresponding to the 6LBR. As a service convergence point provided by the 6LoWPAN network governed by the DA, it maintains a database containing all available services and SA information of the services and service configuration parameters, and responds to a service query request from the UA. Meanwhile, it has a service configuration function for the nodes within the network, and this is decided by the core status of the 6LBR within the network. Considered from a security perspective, the DA should also have an authentication and authorization function with the devices within the network.

SA: corresponding to the 6LR or 6LH. As a service agent within the 6LoWPAN network, it advertises all services that can be provided by the SA and parameters of the services to the DA, the service parameters are divided into intrinsic parameters and configurable parameters.

UA: corresponding to the 6LR or 6LH. As a user of the service within the 6LoWPAN network, it queries an available service to the DA , and acquires address information of the service agent namely the SA and service configuration information.

The nodes within the 6LoWPAN network either the 6LR or the 6LH can serve as the SA or the UA, but in the same application interaction, each node only plays one role. For example, in the same application interaction, if the 6LR serves as the SA, it cannot serve as the UA; similarly, if the 6LH serves as the SA, it cannot serve as the UA.

After the network is initialized through the neighbor discovery protocol, the 6LoWPAN border router has been advertised in the whole network, and the border router is taken as the DA device, thus a multicast discovery process of the DA can be omitted. Either a service request message of the SA device or a service request message of the UA is directly sent to the DA, and a multicast service advertisement process of the SA and a multicast service query process of the UA are omitted, which greatly reduces the total amount of network traffics. Meanwhile, new 6LoWPAN nodes can access the network rapidly and advertise services that can be provided by the nodes to the border router, which provides higher extendibility for the 6LoWPAN that may be constituted by thousands of nodes.

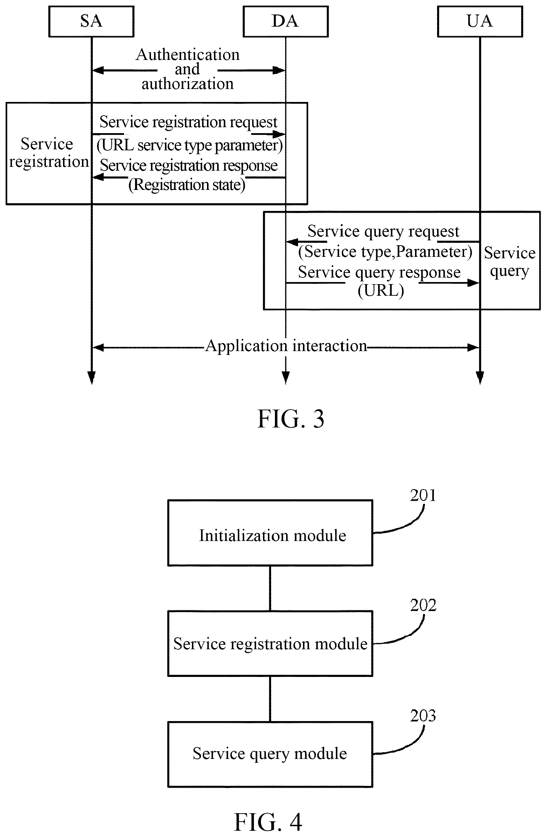

After the 6LoWPAN network is initialized, as show in FIG. 3, before the node (SA or UA) performs application data interaction, three steps are mainly included: DA authentication and authorization, service registration and service query respectively. The former two processes are service initialization flows executed after the initialization of the 6LoWPAN network is finished or when the SA device accesses the network for the first time, and the service query is performed before the UA application is started.

In step S102, a service registration step, a service agent SA advertises a service type that can be provided by the SA to a border router.

In the step, before the service registration, the DA authentication and authorization is firstly performed. Due to the core status and key role of the DA in the embodiment of the present invention, especially in an application scenario with a higher security level, the authentication and authorization between the DA and the node is a very important process. However, the node is required to maintain certain extended service configuration information in this process, such as an account password and so on, a comparatively complicated security mechanism and even participation of a third-party trusted authority are required, and the authentication and authorization can be performed with the existing authentication and authorization method, which will not be described in detail in the embodiment of the present invention.

When the network is initialized, since it can be regarded that the authoritative border router option in the neighbor discovery protocol has provided certain authentication mechanism, when the requirement for the application security level is not high and the limitation of 6LoWPAN node performances is stronger, this phase can be considered to be omitted. Therefore, the authentication and authorization process of the DA is taken as an optional step in the embodiment of the present invention, and different authentication levels can be set according to the 6LoWPAN node performances and application scenarios.

After just accessing the network and completing the network initialization process, the 6LoWPAN node (SA) is required to advertise a service type that can be provided by the SA and parameters of the service to the border router (DA), and this process is called the service registration.

The specific step is: firstly the SA sending a service registration request message to the DA, and wherein the service registration request message carries a URL of a service type provided by the SA, service types can be more than one, the SA setting a validity period for each service, and wherein the service registration request message further carries certain optional parameters used for indicating configuration of the services in the meantime.

When receiving the service registration request message sent by the SA, the DA searches the same service type in a service database, and adds an address of the SA and service configuration information into a corresponding service type. If the same service type is not found, a new service item is added.

After the service registration is completed, the DA sends a service registration response message to the SA so as to indicate whether the registration is successful or not. An unsuccessful registration may be caused by cases that the service provided by the SA is not within a service scope governed by the DA or the service database in the DA has been full.

In step S103, a service query step, a user agent UA queries information of the SA that can provide the service to the border router; the border router sends service query response information to the UA; and application interaction is performed between the SA and the UA.

In the query process, the service is located by the URL in the embodiment of the present invention. Before the UA device starts an application interaction, it is required to firstly query information of an SA device that can provide the service to the DA. When a UA requests the DA for the service in the network, the UA firstly sends a unicast service query message to the DA, the unicast service query message carries a service type and parameter configuration of the service type, and indicates a service which the UA is interested by proving a URL responded by the expected service.

The DA searches a matched URL according to the service type, screens a series of eligible SA devices according to parameters sent by the UA in the meantime, and merges information of the SA devices into one response within a maximum data packet length range, which avoids overhead of a single service discovery message. After receiving configuration success information of the SA, the DA sends the service query response information to the UA, and the information contains a service: URL list that can provide a corresponding service.

The URL can be appointed by the two participants, compact coding is used and it is not required to change any service discovery interaction mechanism, and message overhead can be reduced in the meantime. For example, a switch gear sends a URL service request like service: lamp to a building auto-control gateway (DA) and queries information of a lamp source device to the network, meanwhile it can attach certain parameter conditions for the DA to screen and query the lamp source device.

A basic expression format of Service:URL of each service is:
service:<abstract-type>:<concrete-type>://hostname:port
For example, a URL of a lamp source service is
service:lamp://192.168.168.168:8080

Wherein, lamp is the service type, the service type can also be expressed more specifically, for example, lamp:red, that is, a red lamp service. 192.168.168.168:8080 after :// represents an address of the SA and a service port, and a form of expression is ://address:port.

The traditional SLP protocol can implement UDP transmission or TCP transmission simultaneously, and a multicast message and a unicast message coexist. Due to characteristics such as low rate and low power consumption of the IEEE802.15.4, the service discovery protocol in the 6LoWPAN network should implement a simple interaction and low data overhead as far as possible. Since an adaptation function of the 6LoWPAN supports the IPv6 and UDP protocol well, the service discovery protocol of the embodiment of the present invention is only to adopt UDP protocol transmission. For the DA has been determined in the network initialization process, and the node is not required to send a multicast request message, thereby only unicast transmission is adopted. Therefore, a simple "request/response" unicast transmission mode is adopted in either the service registration process of the SA to the DA or the service query process of the UA to the DA.

As shown in FIG. 4, the embodiment of the present invention also relates to a service discovery apparatus based on a 6LoWPAN network for implementing the above method, which includes:
an initialization module 201, configured to make a host complete a router discovery process and a host address registration process respectively;
a service registration module 202, configured to make a service agent SA advertise a service type that can be provided by the SA to a border router; and
a service query module 203, configured to make a user agent UA query information of the SA that can provide the service to the border router; make the border router send service query response information to the UA; and make application interaction be performed between the SA and the UA.

Wherein, the border router is taken as a directory agent DA; the SA is taken as a router or a host, the UA is taken as a router or a host; but in a same application interaction, the router or the host can only serve as one of the SA and the UA.

The initialization module 201 is specifically configured to:
make the host firstly perform multicast to send a router solicitation message RS to search the router; make the router reply with a router advertisement message RA to the host, and wherein the router advertisement message RA carries address prefix information, an authoritative border router option and a directory agent DA marker; and make a DA address be advertised in the whole network; and make a router discovery process and a DA discovery process be completed; and
make the host construct a global IP address of the host according to the received address prefix information, perform address registration to the router through a neighbor solicitation message NS, wherein the neighbor solicitation message NS carries an address registration option; and make the router feed a neighbor advertisement message NA back to the host, and wherein the neighbor advertisement message NA carries a registration result state option.

The service registration module 202 is specifically configured to:
make the SA send a service registration request message to the border router, wherein service registration request message carries a URL of a service type provided by the SA;
when the border router receives the service registration request message, make the border router search for a coincident service type in a service database, and add an address of the SA and service configuration information into a corresponding service type; and
after the service registration is completed, make the border router send a service registration response message to the SA so as to indicate whether the registration is successful or not.

The service query module 203 is specifically configured to:
make the UA send a service query message to the DA for requesting a service in the network, wherein the service query message carries a service type and parameter configuration of the service type, and express a service expected to be acquired by providing a URL expected to be responded by the service; and
make the DA search a matched URL according to the service type, screen eligible SA devices according to parameters sent by the UA in the meantime, and merge information of the SA devices into one response, and send the service query response information to the UA, wherein the information contains a URL list that can provide corresponding services.

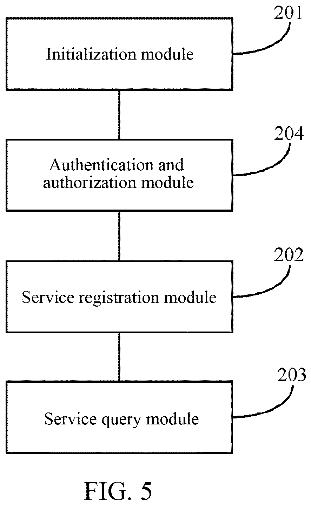

As shown in FIG. 5, in order to achieve a better technical effect, the above apparatus also includes:
an authentication and authorization module 204, configured to perform authentication and authorization on a service route before performing the service registration.

As can be seen from the above embodiments, in the embodiments of the present invention, with respect to limitations such as storage capacity and energy consumption of a 6LoWPAN terminal, an interaction mechanism is simplified as much as possible, and a service discovery message is simplified to reduce a data packet load, so as to make the 6LoWPAN terminal adaptable to an 802.15.4 low-rate wireless network, which implements low resource overhead and a simple mechanism; and a service discovery interaction method is particularly designed with respect to cases such as a huge number of application terminals and extensibility of application functions in the Internet of Things, which has advantages of high flexibility and strong extensibility.

Though the preferred embodiments of the present invention has been disclosed for the purpose of illustration, the skilled in the art will realize that various improvements, additions and replacements are also possible, therefore, the scope of the embodiments of the present invention should not be limited to the above embodiments.

### Industrial Applicability

In the embodiments of the present invention, with respect to limitations such as storage capacity and energy consumption of a 6LoWPAN terminal, an interaction mechanism is simplified as much as possible, and a service discovery message is simplified to reduce a data packet load, so as to make the 6LoWPAN terminal adaptable to an 802.15.4 low-rate wireless network, which implements low resource overhead and a simple mechanism; and a service discovery interaction method is particularly designed with respect to cases such as a huge number of application terminals and extensibility of application functions in the Internet of Things, which has advantages of high flexibility and strong extensibility.

## Claims

1. A service discovery method based on an IPv6 over Low-Power Wireless Personal Area Networks, 6LoWPAN, network, comprising:
an initialization step, wherein a host completes a router discovery process and a host address registration process respectively (S101);
a service registration step, wherein a service agent SA advertises a service type that can be provided by the SA to a border router (S102), wherein the service registration step comprises:
the SA sending a service registration request message to the border router, wherein the service registration request message carries a URL of a service type provided by the SA;
when receiving the service registration request message, the border router searching for a coincident service type in a service database, and adding an address of the SA and service configuration information into a corresponding service type;
after the service registration is completed, the border router sending a service registration response message to the SA to indicate whether the registration is successful or not; and
a service query step, wherein a user agent UA, running in the host, queries the border router for information of the SA that can provide the service; the border router sends service query response information to the UA; and application interaction is performed between the SA and the UA (S103).

2. The service discovery method based on the 6LoWPAN network according to claim 1, wherein, the border router is taken as a directory agent DA; the SA is a router, the UA is a part of a host.

3. The service discovery method based on the 6LoWPAN network according to claim 1 or 2, wherein, the initialization step comprises:
the host firstly performing multicast to send a router solicitation message RS to search the router; the router replying with a router advertisement message RA to the host, wherein the router advertisement message RA carries address prefix information, an authoritative border router option and a directory agent DA marker; and advertising a DA address in the whole network; and completing a router discovery process and a DA discovery process; and
the host constructing a global IP address of the host according to the received address prefix information, performing address registration to the router through a neighbor solicitation message NS wherein the neighbor solicitation message NS carries an address registration option; and the router feeding a neighbor advertisement message NA back to the host, wherein the neighbor advertisement message NA carries a registration result state option.

4. The service discovery method based on the 6LoWPAN network according to claim 1 or 2, wherein, the service query step comprises:
the UA sending a service query message to the DA for requesting a service in the network, wherein the service query message carries a service type and parameter configuration of the service type, and indicating a service expected to be acquired by providing a URL expected to be responded by a service; and
the DA searching a matched URL according to the service type, meanwhile screening out eligible SA devices according to parameters sent by the UA, and merging information of the SA devices into one response, and sending the service query response information to the UA, wherein the information contains a URL list that can provide corresponding services.

5. The service discovery method based on the 6LoWPAN network according to claim 1, wherein, before the service registration step, authentication and authorization are performed on a service route.

6. A service discovery system based on an IPv6 over Low-Power Wireless Personal Area Networks, 6LoWPAN, network, comprising:
an initialization module (201) in a host, configured to complete a router discovery process and a host address registration process respectively;
a service registration module (202) in a service agent SA, configured to advertise a service type that can be provided by the SA to a border router; send a service registration request message to the border router, wherein the service registration request message carries a URL of a service type provided by the SA;
a module in the border router, configured to receive the service registration request message, search for a coincident service type in a service database, and add an address of the SA and service configuration information into a corresponding service type; and after the service registration is completed, send a service registration response message to the SA to indicate whether the registration is successful or not; and
a service query module (203) in a user agent UA, running in the host and configured to query the border router for information of the SA that can provide the service; wherein the border router is further configured to send service query response information to the UA; and the SA and UA are further configured to make application interaction between the SA and the UA.

7. The service discovery system based on the 6LoWPAN network according to claim 6, wherein, the border router is taken as a directory agent DA; the SA is taken as a router, the UA is taken as a part of a host.

8. The service discovery system based on the 6LoWPAN network according to claim 6 or 7, wherein, the initialization module (201) is configured to:
make the host firstly perform multicast to send a router solicitation message RS to search the router, make the router reply with a router advertisement message RA to the host, wherein the router advertisement message RA carries address prefix information, an authoritative border router option and a directory agent DA marker; and make a DA address be advertised in the whole network; and make a router discovery process and a DA discovery process be completed; and
make the host construct a global IP address of the host according to the received address prefix information, perform address registration to the router through a neighbor solicitation message NS, wherein the neighbor solicitation message NS carries an address registration option; and make the router feed a neighbor advertisement message NA back to the host, wherein the neighbor advertisement message NA carries a registration result state option.

9. The service discovery system based on the 6LoWPAN network according to claim 6 or 7, wherein, the service query module (203) is configured to:
make the UA send a service query message to the DA for requesting a service in the network, wherein the service query message carries a service type and parameter configuration of the service type, and indicate a service expected to be acquired by providing a URL expected to be responded by a service; and
make the DA search a matched URL according to the service type, screen out eligible SA devices according to parameters sent by the UA in the meantime, and merge information of the SA devices into one response, and send the service query response information to the UA, wherein the information contains a URL list that can provide corresponding services.

10. The service discovery system based on the 6LoWPAN network according to claim 6, further comprising:
an authentication and authorization module (204), configured to perform authentication and authorization on a service route before performing the service registration.

## Patentansprüche

1. Diensterkennungsverfahren auf der Grundlage eines IPv6 over Low-Power Wireless Personal Area Networks (6LoWPAN)-Netzwerks, das Folgendes umfasst:
einen Initialisierungsschritt, in dem ein Host einen Routererkennungsprozess bzw. einen Host-Adressenregistrierungsprozess vollendet (S101);
einen Dienstregistrierungsschritt, in dem ein Dienst-Agent SA einen Dienst-Typ, der durch den SA bereitgestellt werden kann, an einen Grenzrouter avisiert (S102), wobei der Dienstregistrierungsschritt Folgendes umfasst:
der SA sendet eine Dienstregistrierungsanforderungsnachricht an den Grenzrouter, wobei die Dienstregistrierungsanforderungsnachricht eine URL eines durch den SA bereitgestellten Dienst-Typs transportiert;
wenn die Dienstregistrierungsanforderungsnachricht empfangen wird, sucht der Grenzrouter nach einem übereinstimmenden Dienst-Typ in einer Dienstdatenbank und bindet eine Adresse des SA und Dienstkonfigurationsinformationen in einen entsprechenden Dienst-Typ ein;
nachdem die Dienstregistrierung vollendet ist, sendet der Grenzrouter eine Dienstregistrierungs-Antwortnachricht an den SA, um anzuzeigen, ob die Registrierung erfolgreich ist oder nicht; und
einen Dienstabfrageschritt, in dem ein Nutzer-Agent UA, der in dem Host ausgeführt wird, den Grenzrouter nach Informationen des SA, der den Dienst bereitstellen kann, abfragt; der Grenzrouter Dienstabfrage-Antwortinformationen an den UA sendet; und eine Anwendungsinteraktion zwischen dem SA und dem UA ausgeführt wird (S103).

2. Diensterkennungsverfahren auf der Grundlage des 6LoWPAN-Netzwerks nach Anspruch 1, wobei der Grenzrouter als ein Verzeichnis-Agent DA genommen wird, der SA ein Router ist, und der UA ein Teil eines Hosts ist.

3. Diensterkennungsverfahren auf der Grundlage des 6LoWPAN-Netzwerks nach Anspruch 1 oder 2, wobei der Initialisierungsschritt Folgendes umfasst:
der Host führt zuerst einen Multicast aus, um eine Routeranfragenachricht RS zu senden, um den Router zu suchen; der Router antwortet dem Host mit einer Routeravisierungsnachricht RA, wobei die Routeravisierungsnachricht RA Adressenpräfix-Informationen, eine verbindliche Grenzrouteroption und einen Verzeichnis-Agent DA-Marker transportiert; und Avisieren einer DA-Adresse in dem gesamten Netzwerk; und Vollenden eines Routererkennungsprozesses und eines DA-Erkennungsprozesses; und
der Host konstruiert eine globale IP-Adresse des Hosts gemäß den empfangenen Adressenpräfix-Informationen, führt eine Adressenregistrierung in dem Router durch eine Nachbaranfragenachricht NS aus, wobei die Nachbaranfragenachricht NS eine Adressenregistrierungsoption transportiert; und der Router sendet eine Nachbaravisierungs-Nachricht NA zu dem Host zurück, wobei die Nachbaravisierungs-Nachricht NA eine Registrierungsergebniszustandsoption transportiert.

4. Diensterkennungsverfahren auf der Grundlage des 6LoWPAN-Netzwerks nach Anspruch 1 oder 2, wobei der Dienstabfrageschritt Folgendes umfasst:
der UA sendet eine Dienstabfragenachricht an den DA zum Anfordern eines Dienstes in dem Netzwerk, wobei die Dienstabfragenachricht einen Dienst-Typ und eine Parameterkonfiguration des Dienst-Typs transportiert, und zeigt einen Dienst an, von dem erwartet wird, das er erworben wird, indem eine URL bereitgestellt wird, von der erwartet wird, dass sie durch einen Dienst beantwortet wird; und
die DA sucht eine abgeglichene URL gemäß dem Dienst-Typ, während in Frage kommende SA-Vorrichtungen gemäß durch den UA gesendeten Parametern herausgesucht werden, und fusioniert Informationen der SA-Vorrichtungen zu einer einzigen Antwort, und sendet die Dienstabfrage-Antwortinformationen an den UA, wobei die Informationen eine URL-Liste enthalten, die entsprechende Dienste bereitstellen kann.

5. Diensterkennungsverfahren auf der Grundlage des 6LoWPAN-Netzwerks nach Anspruch 1, wobei vor dem Dienstregistrierungsschritt eine Authentifizierung und Autorisierung auf einer Dienstroute ausgeführt werden.

6. Diensterkennungssystem auf der Grundlage eines IPv6 over Low-Power Wireless Personal Area Networks (6LoWPAN)-Netzwerks, das Folgendes umfasst:
ein Initialisierungsmodul (201) in einem Host, das dafür konfiguriert ist, einen Routererkennungsprozess bzw. einen Host-Adressenregistrierungsprozess zu vollenden;
ein Dienstregistrierungsmodul (202) in einem Dienst-Agenten SA, das dafür konfiguriert ist, einen Dienst-Typ, der durch den SA bereitgestellt werden kann, an einen Grenzrouter zu avisieren; und eine Dienstregistrierungsanforderungsnachricht an den Grenzrouter zu senden, wobei die Dienstregistrierungsanforderungsnachricht eine URL eines durch den SA bereitgestellten Dienst-Typs transportiert;
ein Modul in dem Grenzrouter, das dafür konfiguriert ist, die Dienstregistrierungsanforderungsnachricht zu empfangen, nach einem übereinstimmenden Dienst-Typ in einer Dienstdatenbank zu suchen, und eine Adresse des SA und Dienstkonfigurationsinformationen in einen entsprechenden Dienst-Typ einzubinden; und nachdem die Dienstregistrierung vollendet ist, eine Dienstregistrierungs-Antwortnachricht an den SA zu senden, um anzuzeigen, ob die Registrierung erfolgreich ist oder nicht; und
ein Dienstabfrage-Modul (203) in einem Nutzer-Agenten UA, das in dem Host ausgeführt wird und dafür konfiguriert ist, den Grenzrouter nach Informationen des SA, der den Dienst bereitstellen kann, abzufragen; wobei der Grenzrouter ferner dafür konfiguriert ist, Dienstabfrage-Antwortinformationen an den UA zu senden; und der SA und der UA ferner dafür konfiguriert sind, eine Anwendungsinteraktion zwischen dem SA und der UA auszuführen.

7. Diensterkennungssystem auf der Grundlage des 6LoWPAN-Netzwerks nach Anspruch 6, wobei der Grenzrouter als ein Verzeichnis-Agent DA genommen wird; der SA als ein Router genommen wird, und der UA als ein Teil eines Hosts genommen wird.

8. Diensterkennungssystem auf der Grundlage des 6LoWPAN-Netzwerks nach Anspruch 6 oder 7, wobei das Initialisierungsmodul (201) für Folgendes konfiguriert ist:
Veranlassen, dass der Host zuerst einen Multicast ausführt, um eine Routeranfragenachricht RS zu senden, um den Router zu suchen, Veranlassen, dass der Router mit einer Routeravisierungsnachricht RA an den Host antwortet, wobei die Routeravisierungsnachricht RA Adressenpräfix-Informationen, eine verbindliche Grenzrouteroption und einen Verzeichnis-Agent DA-Marker transportiert; und Veranlassen, dass eine DA-Adresse in dem gesamten Netzwerk avisiert wird; und Veranlassen, dass ein Routererkennungsprozess und ein DA-Erkennungsprozess vollendet werden; und
Veranlassen, dass der Host eine globale IP-Adresse des Hosts gemäß den empfangenen Adressenpräfix-Informationen konstruiert, eine Adressenregistrierung in dem Router durch eine Nachbaranfragenachricht NS ausführt, wobei die Nachbaranfragenachricht NS eine Adressenregistrierungsoption transportiert; und Veranlassen, dass der Router eine Nachbaravisierungs-Nachricht NA an den Host zurücksendet, wobei die Nachbaravisierungs-Nachricht NA eine Registrierungsergebniszustandsoption transportiert.

9. Diensterkennungssystem auf der Grundlage des 6LoWPAN-Netzwerks nach Anspruch 6 oder 7, wobei das Dienstabfrage-Modul (203) für Folgendes konfiguriert ist:
Veranlassen, dass der UA eine Dienstabfragenachricht an den DA zum Anfordern eines Dienstes in dem Netzwerk sendet, wobei die Dienstabfragenachricht einen Dienst-Typ und eine Parameterkonfiguration des Dienst-Typs transportiert, und einen Dienst anzeigt, von dem erwartet wird, das er erworben wird, indem eine URL bereitgestellt wird, von der erwartet wird, dass sie durch einen Dienst beantwortet wird; und
Veranlassen, dass der DA eine abgeglichene URL gemäß dem Dienst-Typ sucht, in Frage kommende SA-Vorrichtungen gemäß Parametern heraussucht, die derweil durch den UA gesendet wurden, und Informationen der SA-Vorrichtungen zu einer einzigen Antwort fusioniert, und die Dienstabfrage-Antwortinformationen an den UA sendet, wobei die Informationen eine URL-Liste enthalten, die entsprechende Dienste bereitstellen kann.

10. Diensterkennungssystem auf der Grundlage des 6LoWPAN-Netzwerks nach Anspruch 6, das ferner Folgendes umfasst:
ein Authentifizierungs- und Autorisierungsmodul (204), das dafür konfiguriert ist, eine Authentifizierung und Autorisierung auf einer Dienstroute auszuführen, bevor die Dienstregistrierung ausgeführt wird.

## Revendications

1. Procédé de découverte de service basé sur un réseau personnel sans fil de faible puissance sur IPv6, 6LoWPAN, comprenant :
une étape d'initialisation, dans lequel un hôte effectue respectivement un processus de découverte de routeur et un processus d'enregistrement d'adresse d'hôte (S101) ;
une étape d'enregistrement de service, dans lequel un agent de service, SA, annonce un type de service qui peut être fourni par le SA à un routeur de frontière (S102), dans lequel l'étape d'enregistrement de service comprend :
l'envoi, par le SA, d'un message de demande d'enregistrement de service au routeur de frontière, dans lequel le message de demande d'enregistrement de service porte un URL d'un type de service fourni par le SA ;
lors de la réception du message de demande d'enregistrement de service, la recherche, par le routeur de frontière, d'un type de service coïncidant dans une base de données de service et l'ajout d'une adresse du SA et d'informations de configuration de service dans un type de service correspondant ;
après l'exécution de l'enregistrement de service, l'envoi, par le routeur de frontière, d'un message de réponse d'enregistrement de service au SA pour indiquer la réussite ou l'échec de l'enregistrement ; et
une étape d'interrogation de service, dans lequel un agent d'utilisateur, UA, fonctionnant dans l'hôte, interroge le routeur de frontière en ce qui concerne des informations du SA pouvant fournir le service ; le routeur de frontière envoie des informations de réponse d'interrogation de service à l'UA ; et une interaction d'application est effectuée entre le SA et l'UA (S103).

2. Procédé de découverte de service basé sur le réseau 6LoWPAN selon la revendication 1, dans lequel le routeur de frontière est pris en tant qu'agent de répertoire, DA ; le SA est un routeur et l'UA est une partie d'un hôte.

3. Procédé de découverte de service basé sur le réseau 6LoWPAN selon la revendication 1 ou 2, dans lequel l'étape d'initialisation comprend :
l'exécution en premier, par l'hôte, d'une multidiffusion pour envoyer un message de sollicitation de routeur, RS, afin de rechercher le routeur ; le routeur répondant avec un message d'annonce de routeur, RA, à l'hôte, dans lequel le message d'annonce de routeur, RA, porte des informations de préfixe d'adresse, une option de routeur de frontière faisant autorité et un marqueur d'agent de répertoire, DA ; l'annonce d'une adresse DA dans tout le réseau ; et l'exécution d'un processus de découverte de routeur et d'un processus de découverte de DA ; et
la construction, par l'hôte, d'une adresse IP globale de l'hôte en fonction des informations de préfixe d'adresse reçues, l'exécution d'un enregistrement d'adresse au routeur par l'intermédiaire d'un message de sollicitation de voisin, NS, dans lequel le message de sollicitation de voisin, NS, porte une option d'enregistrement d'adresse ; et le retour, par le routeur, d'un message d'annonce de voisin, NA, à l'hôte, dans lequel le message d'annonce de voisin, NA, porte une option d'état de résultat d'enregistrement.

4. Procédé de découverte de service basé sur le réseau 6LoWPAN selon la revendication 1 ou 2, dans lequel l'étape de l'interrogation de service comprend :
l'envoi, par l'UA, d'un message d'interrogation de service au DA pour demander un service dans le réseau, dans lequel le message d'interrogation de service porte une configuration de type et de paramètre de service du type de service, et l'indication d'un service dont l'acquisition est prévue en fournissant un URL qu'un service est censé retourner ; et
la recherche, par le DA, d'un URL correspondant en fonction du type de service, le filtrage de dispositifs de SA éligibles en fonction de paramètres envoyés par l'UA, la fusion d'informations des dispositifs SA dans une réponse, et l'envoi des informations de réponse d'interrogation de service à l'UA, dans lequel les informations contiennent une liste d'URL pouvant fournir des services correspondants.

5. Procédé de découverte de service basé sur le réseau 6LoWPAN selon la revendication 1, dans lequel, avant l'étape de l'enregistrement de service, une authentification et une autorisation sont effectuées sur un itinéraire de service.

6. Système de découverte de service basé sur un réseau personnel sans fil de faible puissance sur IPv6, 6LoWPAN, comprenant :
un module d'initialisation (201) dans un hôte, configuré pour effectuer respectivement un processus de découverte de routeur et un processus d'enregistrement d'adresse d'hôte ;
un module d'enregistrement de service (202) dans un agent de service, SA, configuré pour effectuer l'annonce d'un type de service qui peut être fourni par le SA à un routeur de frontière ; et l'envoi d'un message de demande d'enregistrement de service au routeur de frontière, dans lequel le message de demande d'enregistrement de service porte un URL d'un type de service fourni par le SA ;
un module dans le routeur de frontière, configuré pour effectuer la réception du message de demande d'enregistrement de service, la recherche d'un type de service coïncidant dans une base de données de service et l'ajout d'une adresse du SA et d'informations de configuration de service dans un type de service correspondant ; et, après l'exécution de l'enregistrement de service, l'envoi d'un message de réponse d'enregistrement de service au SA pour indiquer la réussite ou l'échec de l'enregistrement ; et
un module d'interrogation de service (203) dans un agent d'utilisateur, UA, fonctionnant dans l'hôte et configuré pour interroger le routeur de frontière en ce qui concerne des informations du SA pouvant fournir le service ; dans lequel le routeur de frontière est en outre configuré pour envoyer des informations de réponse d'interrogation de service à l'UA ; et le SA et l'UA sont en outre configurés pour effectuer une interaction d'application entre le SA et l'UA.

7. Système de découverte de service basé sur le réseau 6LoWPAN selon la revendication 6, dans lequel le routeur de frontière est pris en tant qu'agent de répertoire, DA ; le SA est un routeur et l'UA est une partie d'un hôte.

8. Système de découverte de service basé sur le réseau 6LoWPAN selon la revendication 6 ou 7, dans lequel le module d'initialisation (201) est configuré pour :
amener l'hôte à effectuer en premier une multidiffusion pour envoyer un message de sollicitation de routeur, RS, afin de rechercher le routeur ; amener le routeur à répondre avec un message d'annonce de routeur, RA, à l'hôte, dans lequel le message d'annonce de routeur, RA, porte des informations de préfixe d'adresse, une option de routeur de frontière faisant autorité et un marqueur d'agent de répertoire, DA ; provoquer l'annonce d'une adresse DA dans tout le réseau ; et amener un routeur à effectuer un processus de découverte de routeur et un processus de découverte de DA ; et
amener l'hôte à construire une adresse IP globale de l'hôte en fonction des informations de préfixe d'adresse reçues, effectuer un enregistrement d'adresse au routeur par l'intermédiaire d'un message de sollicitation de voisin, NS, dans lequel le message de sollicitation de voisin, NS, porte une option d'enregistrement d'adresse ; et amener le routeur à retourner un message d'annonce de voisin, NA, à l'hôte, dans lequel le message d'annonce de voisin, NA, porte une option d'état de résultat d'enregistrement.

9. Système de découverte de service basé sur le réseau 6LoWPAN selon la revendication 6 ou 7, dans lequel le module d'interrogation de service (203) est configuré pour :
amener l'UA à effectuer l'envoi d'un message d'interrogation de service au DA pour demander un service dans le réseau, dans lequel le message d'interrogation de service porte une configuration de type et de paramètre de service du type de service, et l'indication d'un service dont l'acquisition est prévue en fournissant un URL qu'un service est censé retourner ; et
amener le DA à effectuer la recherche d'un URL correspondant en fonction du type de service, le filtrage de dispositifs de SA éligibles en fonction de paramètres envoyés par l'UA, la fusion d'informations des dispositifs SA dans une réponse, et l'envoi des informations de réponse d'interrogation de service à l'UA, dans lequel les informations contiennent une liste d'URL pouvant fournir des services correspondants.

10. Système de découverte de service basé sur le réseau 6LoWPAN selon la revendication 6, comprenant en outre :
un module d'authentification et d'autorisation (204) configuré pour effectuer une authentification et une autorisation sur un itinéraire de service avant l'exécution de l'enregistrement de service.
